(19) Europäisches Patentamt
European Patent Office
Office européen des brevets

(11) EP 3 480 237 B1

(12) # EUROPÄISCHE PATENTSCHRIFT

(45) Veröffentlichungstag und Bekanntmachung des Hinweises auf die Patenterteilung:
**31.12.2025 Patentblatt 2026/01**

(21) Anmeldenummer: **18204293.7**

(22) Anmeldetag: **05.11.2018**

(51) Internationale Patentklassifikation (IPC):
***C08G 59/38*** $^{(2006.01)}$ ***C08G 59/40*** $^{(2006.01)}$
***C08G 59/50*** $^{(2006.01)}$ ***C08G 59/62*** $^{(2006.01)}$

(52) Gemeinsame Patentklassifikation (CPC):
**C08G 59/621; C08G 59/38; C08G 59/4014; C08G 59/5033**

(54) **MEHRKOMPONENTEN-EPOXIDHARZMASSE UND HÄRTERKOMPONENTE DAFÜR**

MULTI-COMPONENT EPOXY RESIN MASS AND CURING AGENTS THEREFOR

MASSE DE RÉSINE ÉPOXY MULTICOMPOSANTE ET COMPOSANTS DE DURCISSEMENT CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2017 EP 17200077**

(43) Veröffentlichungstag der Anmeldung:
**08.05.2019 Patentblatt 2019/19**

(73) Patentinhaber: **HILTI Aktiengesellschaft**
**9494 Schaan (LI)**

(72) Erfinder:
- **Behrens, Nicole**
  **81245 München (DE)**
- **Bornschlegl, Alexander**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A2- 0 351 365**
**EP-B1- 1 716 195**
**WO-A1-2014/067095**
**WO-A1-2014/090382**
**WO-A1-2015/007879**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

GEBIET DER ERFINDUNG

Die Erfindung betrifft eine Mehrkomponenten-Epoxidharzmasse, insbesondere eine Epoxidharzmasse für Befestigungszwecke, und eine Härterkomponente für die Epoxidharzmasse, die wenigstens eine Mannich-Base als Härterkomponente für Epoxide enthält.

TECHNISCHER HINTERGRUND

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet.

Die Verwendung von Mannich-Basen als Bestandteil von Härterkomponenten für Epoxidharze wird unter anderem in der DE 10 2013 113465 A und der WO 2005/090433 A beschrieben. Die Mannich-Basen werden üblicherweise in Kombination mit Polyaminen und wahlweise weiteren Bestandteilen als Härterkomponente von Mehrkomponenten-Epoxidharzmassen für Befestigungszwecke eingesetzt. Mannich-Basen sind im Vergleich zu Polyaminen wie beispielsweise mXDA apolare Substanzen und haben daher den Vorteil, dass sie in nassen Untergründen nicht leicht ausgewaschen werden. Eine härtbare Masse, die eine Mannich-Base in der Härterkomponente enthält, wird daher nach Aushärtung im nassen Bohrloch höhere Auszugskräfte zeigen als eine vergleichbare Masse mit einem Härter auf Basis von niedermolekularen Polyaminen.

Die WO 2014/067095 A beschreibt eine Härterkomponente für Epoxide, die eine Kombination von Phenalkamin und styrolisiertem Phenol oder styrolisiertem Phenolnovolak enthält. Das Phenalkamin ist eine besondere, stark hydrophobe Mannich-Base, die durch Umsetzung von Cashewschalenöl (cashew nut shell liquid; CNSL), Formaldehyd und Polyaminen wie Diethylendiamin gewonnen wird.

Aus der EP 0 351 365 A sind Epoxidharzmassen mit einem latenten Härter und einen Beschleuniger bekannt, wobei der Beschleuniger aus einer Mannich-Base auf Basis eines Novolaks gebildet ist.

Die EP 1 716 195 B1 beschreibt ein Mehrkomponentenkit für eine härtbare Masse für Befestigungszwecke umfassend eine Epoxidharzkomponente (a), die härtbare Epoxide beinhaltet, und eine Härterkomponente (b), welche eine Mannichbasenformulierung umfasst.

Die Aushärtegeschwindigkeit von Mörtelmassen auf der Grundlage von Epoxidharzen und Mannich-Basen kann zwar in gewissem Rahmen durch den Phenolgehalt der Mannich-Base gesteuert werden. Im Übrigen ist die Aushärtegeschwindigkeit aber von dem in der Mischung vorhandenen Amin abhängig. Übliche, auf dem Markt befindliche Epoxidharzmassen mit Härtern auf der Grundlage von Mannich-Basen wie beispielsweise RE 100 (Fa. Hilti, Schaan, Liechtenstein) oder FIS EM 390 S (Fa. Fischer, Waldachtal, DE) haben in der Anwendung eine Aushärtedauer von mindestens 12 Stunden bei 20°C, wobei die Aushärtedauer die Zeit bezeichnet, nach der die Befestigung belastet werden kann. Eine Beschleunigung der Aushärtung ist sinnvoll, um die Wartezeiten vor dem nächsten Arbeitsschritt zu verkürzen.

ZUSAMMENFASSUNG DER ERFINDUNG

Aufgabe der Erfindung ist es daher, eine Härterkomponente für Mehrkomponenten-Epoxidharzmassen bereitzustellen, die als Härter eine Mannich-Base enthält und die für Befestigungszwecke geeignet ist, wobei die Mehrkomponentenmasse im Vergleich zu herkömmlichen Mörtelmassen eine verkürzte Aushärtedauer bei vergleichbar hoher Auszugsfestigkeit aufweisen soll.

Die der Erfindung zugrundeliegende Aufgabe wird durch Bereitstellung einer Härterkomponente gemäß Anspruch 1 gelöst. Bevorzugte Ausführungsformen der erfindungsgemäßen Härterkomponente sind in den Unteransprüchen angegeben, die wahlweise miteinander kombiniert werden können.

Gegenstand der Erfindung ist ferner eine Mehrkomponenten-Epoxidharzmasse gemäß Anspruch 10.

Bevorzugte Ausführungsformen der erfindungsgemäßen Epoxidharzmasse sind in den Unteransprüchen angegeben, die wahlweise miteinander kombiniert werden können. Erfindungsgemäß wird eine Härterkomponente für eine Mehrkomponenten-Epoxidharzmasse bereitgestellt, die als Härter wenigstens eine Mannich-Base und ein gegenüber Epoxidgruppen reaktives Amin umfasst, sowie wenigstens ein Polyphenol aus der Gruppe der Novolakharze als Beschleuniger,

wobei die Mannich-Base erhältlich ist durch Umsetzung einer aus der aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstofatomen im Molekül, und

wobei das Novolakharz in einem Anteil von 8 bis 25 Gew.-% Gew.-% in der Härterkomponente enthalten ist, bezogen auf den organischen Anteil der Härterkomponente.

Die Verwendung der erfindungsgemäßen Härterkomponente in einer Mehrkomponenten-Epoxidharzmasse für Befestigungszwecke führt zu einer erheblichen Beschleunigung der Aushärtereaktion. Die gehärteten Massen zeigen eine hervorragende Auszugsfestigkeit in nassen Bohrlöchern und können bereits nach kurzer Zeit, innerhalb von etwa 6 Stunden, belastet werden.

Der organische Anteil der Härterkomponente bezeichnet das Gewicht der Härterkomponente, abzüglich des Gewichts der anorganischen Bestandteile wie beispielsweise Sand und/oder Zement.

Gemäß einer bevorzugten Ausführungsform der erfindungsgemäßen Härterkomponente ist das gegenüber Epoxidharzen reaktive Amin aus der aus aliphatischen, alicyclischen, araliphatischen und aromatischen Aminen bestehenden Gruppe ausgewählt. Das Amin weist bevorzugt im Mittel mindestens zwei an ein Stickstoffatom gebundene reaktive Wasserstoffatome pro Molekül auf.

Die als Härter für Epoxidharze in der Härterkomponente verwendbaren Amine sind dem Fachmann grundsätzlich bekannt. Bevorzugt ist das Amin ein Polyamin mit mindestens zwei Aminogruppen im Molekül. Bei Verwendung von Polyaminen in der Härterkomponente können besonders stabile Netzwerke erhalten werden.

Im Sinne der Erfindung haben die hier und in der nachfolgenden Beschreibung verwendeten Begriffe die folgende Bedeutung:

*"aliphatische Verbindungen"* sind acyclische oder cyclische, gesättigte oder ungesättigte Kohlenstoffverbindungen, ausgenommen aromatische Verbindungen;

*"alicyclische Verbindungen"* sind Verbindungen mit einer carbocyclischen Ringstruktur, ausgenommen Benzolderivate oder andere aromatische Systeme;

*"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

*"aromatische Verbindungen"* sind Verbindungen, die der Hückel (4n+2)-Regel folgen; und

*"Amine"* sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)).

Beispiele für als Epoxid-Härter geeignete Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1, 5-diaminopentan, 1,3-Diaminopentan, 2,2,4- oder 2,4,4-Trimethyl-1, 6-diaminohexan und Gemische davon (TMD), 3-Aminomethyl-3,5,5-trimethylcyclohexan (Isophorondiamin, IPDA), 1,3-Bis(aminomethyl)-cyclohexan (1,3-BAC), 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan (PACM), Bis(4-amino-3-methylcyclohexyl)methan (MACM), Bis-(4-Amino-3,5-dimethlylcyclohexyl)methan Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,6}$]decan (Isomerengemisch, tricyclischer primärer Amine; TCD-Diamin), 1,8-Diamino-p-menthan, N-Aminoethyl-piperazin (N-AEP), N-3-(Aminopropylpiperazin), Piperazin, 4-Methylcyclohexyl-diamin (mCDA).

Bevorzugte Härter in der erfindungsgemäßen Härterkomponente sind Polyamine, wie 2-Methylpentandiamin

(DYTEK A), 1,2 und 1,4-Diaminocyclohexan (1,2-DACH und 1,4-DACH), 3-Aminomethyl-3,5,5-trimethylcyclohexan (IPDA), 1,3-Benzoldimethanamin (m-Xylylendiamin, mXDA), 1,4-Benzoldimethanamin (p-Xylylendiamin, PXDA), 1,6-Diamino-2, 2,4-trimethylhexan (TMD), Diethylentriamin (DETA), Triethylentetramin (TETA), Tetraethylenpentamin (TEPA), Pentaethylenhexamin (PEHA), Bis(4-Aminocyclohexyl)methan (PACM), Bis(4-Amino-3-methylcyclohexyl)methan (MACM), 5-(Aminomethyl)bicyclo[[2.2.1]hept-2-yl]methylamin (NBDA, Norbornandiamin), 1,3-Bisaminomethylcyclohexan (1,3-BAC), (3(4),8(9)Bis(aminomethyl)dicyclo[5. 2.1.$0^{2,6}$]decan (Isomerengemisch, tricyclischer primärer Amine; TCD-Diamin), 1,14-Diamino-4, 11-dioxatetradecan, Dipropylentriamin, 2-Methyl-1, 5-pentandiamin, N, N'-Dicyclohexyl-1, 6-hexandiamin, N, N'-Dimethyl-1, 3-diaminopropan, N, N'-Diethyl-1, 3-diaminopropan, N, N-Dimethyl-1, 3-diaminopropan, sekundäre Polyoxypropylendi- und triamine, 2,5-Diamino-2, 5-dimethylhexan, Bis(amino-methyl)tricyclopentadien, Dipentylamin, N-(Aminoethyl)piperazin (N-AEP), 4-Methylcyclohexyl-diamin (mCDA).

Die Amine können sowohl einzeln als auch im Gemisch von zwei oder mehreren der genannten Amine eingesetzt werden.

Die in der erfindungsgemäßen Härterkomponente in Kombination mit den oben beschriebenen Aminen verwendeten Mannichbasen sind die Reaktionsprodukte eines Amins und eines Aldehyds mit einer phenolischen Verbindung, die aus der aus Phenol, Brenzkatechin, Resorcin, Hydrochinon, Hydroxyhydrochinon, Phloroglucin, Pyrogallol, o-Kresol, m-Kresol, p-Kresol, Bisphenolen wie Bisphenol F oder Bisphenol A, und Kombinationen davon bestehenden Gruppe ausgewählt ist.

Zur Bildung der Mannich-Base wird die phenolische Verbindung mit einem vorzugsweise primären oder sekundären Amin und einem Aldehyd oder einer Aldehydvorstufe umgesetzt, die durch Zersetzung einen Aldehyd ergibt. Der Aldehyd oder die Aldehydvorstufe kann vorteilhaft als wässrige Lösung, insbesondere bei erhöhter Temperatur von etwa 50°C bis 90°C, zu der Reaktionsmischung zugesetzt und mit dem Amin sowie der phenolischen Verbindung umgesetzt werden.

Als phenolische Verbindung werden bevorzugt Phenol oder ein styrolisiertes Phenol, Resorcin, styrolisiertes Resorcin, Bisphenol A oder Bisphenol F, besonders bevorzugt Phenol oder ein styrolisiertes Phenol, styrolisiertes Resorcin oder Bisphenol A zur Bildung der Mannich-Base verwendet.

Der zur Bildung der Mannich-Base verwendete Aldehyd ist bevorzugt ein aliphatischer Aldehyd, besonders bevorzugt Formaldehyd. Als Aldehyd-Vorstufe können bevorzugt Trioxan oder Paraformaldehyd verwendet werden, die durch Erhitzen in Gegenwart von Wasser zu Formaldehyd zerfallen.

Das zur Umsetzung mit dem Aldehyd und der phenolischen Verbindung unter Bildung der Mannich-Base verwendete Amin ist bevorzugt eines der oben genannten, gegenüber Epoxid reaktiven Amine, und bevorzugt ein Polyamin. Vorzugsweise liegt das Amin in einem Überschuss vor, so dass die Mannich-Base freie Aminogruppen aufweist.

Das Novolakharz entspricht der folgenden Formel (II):

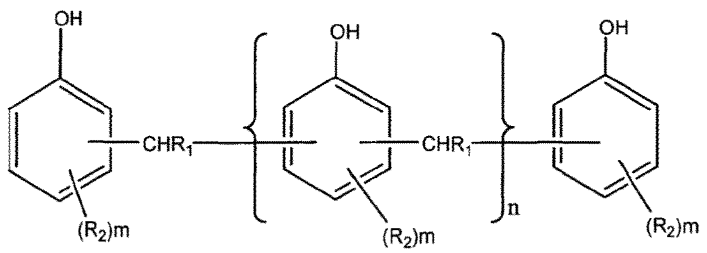
(II),

worin

$R_1$ H bedeutet;
$R_2$ einen $C_1$-$C_{15}$ -Alkylrest bedeutet, bevorzugt einen Methylrest oder tert.-Butylrest;
m 0, 1 oder 2 ist, und bevorzugt 1 ist; und
n 1 bis 15 ist. Ganz besonders bevorzugt entspricht das Novolakharz der obigen Formel (II), worin $R_2$ -$CH_3$ bedeutet und m 1 oder 2 ist, oder $R_2$ tert.-Butyl oder einen $C_1$-$C_{15}$ Alkylrest bedeutet und m 1 ist, und wobei n 1 bis 15 ist.

Die erfindungsgemäße Härterkomponente enthält das Novolakharz einem Anteil von 8 bis 25 Gew.-%, bezogen auf das Gewicht des organischen Anteils der Härterkomponente.

Das gegenüber Epoxidharzen reaktive Amin ist in der erfindungsgemäßen Härterkomponente bevorzugt in einem Anteil von 20 bis 80 Gew.-%, besonders bevorzugt 35 bis 60 Gew.-% enthalten. Des Weiteren enthält die Härterkomponente die mindestens eine Mannich-Base bevorzugt in einem Anteil von 10 bis 70 Gew.-%, besonders bevorzugt 30 bis 65 Gew.-%, jeweils bezogen auf das Gewicht des organischen Anteils der Härterkomponente.

In einer weiteren Ausführungsform umfasst die Härterkomponente weitere Additive aus der Gruppe der Lösemittel, weitere phenolische Beschleuniger, Co-Beschleuniger, Haftvermittler und anorganischen Füllstoffe.

Nicht reaktive Verdünnungsmittel (Lösungsmittel) können vorzugsweise in einer Menge bis zu 30 Gew.-% enthalten sein, bezogen auf die das Gesamtgewicht der Härterkomponente, beispielsweise von 1 bis 20 Gew.-%. Beispiele für geeignete Lösungsmittel sind Niederalkylketone wie Aceton, Diniederalkylniederalkanoylamide wie Dimethylacetamid, Niederalkylbenzole wie Xylole oder Toluol, Phthalsäureester oder Paraffine. Bevorzugt ist die Härterkomponente frei von Lösungsmitteln.

Die weiteren phenolischen Beschleuniger sind vorzugsweise ausgewählt aus Salicylsäure, styrolysierten Phenolen und Cardanol, sowie Mischungen davon. Diese können in einem Anteil von 0 bis 10 Gew.-% in der Härterkomponente vorliegen, bezogen auf das Gesamtgewicht der Härterkomponente.

Als Co-Beschleuniger können beispielsweise Benzylalkohol, tertiäre Amine, Imidazole oder tertiäre Aminophenole, Organophosphine, Lewis-Basen oder -Säuren wie Phosphorsäureester, oder Gemische von zwei oder mehr davon verwendet werden. Die Co-Beschleuniger können auch in der Epoxidharzkomponente (A) vorliegen, soweit sie mit den Epoxidharzen verträglich sind.

Bevorzugt sind die Co-Beschleuniger in der Härterzusammensetzung in einem Gewichtsanteil von 0,001 bis 5 Gew.-% enthalten, bezogen auf das Gesamtgewicht der Härterzusammensetzung.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (AirProducts, Belgien).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mit weiteren reaktiven organischen Gruppen funktionalisiert sind, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt.

Der Haftvermittler kann in einer Menge bis zu 10 Gew.-%, bevorzugt 0,1 bis 5 Gew.-%, bezogen auf das Gesamtgewicht der Härterkomponente enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten der Mehrkomponenten-Mörtelmasse vorhanden sein.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterkomponente. Gegenstand der vorliegenden Erfindung ist ferner eine Mehrkomponenten-Epoxidharzmasse, bevorzugt eine Zweikomponenten-Epoxidharzmasse mit, einer Epoxidharzkomponente (A), die wenigstens ein härtbares Epoxidharz enthält, und wenigstens eine Härterkomponente (B) mit der oben beschriebenen Zusammensetzung.

Die Mehrkomponenten-Epoxidharzmasse wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dienen die erfindungsgemäßen Epoxidharzmassen zur chemischen Befestigung von Verankerungsmitteln.

Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei Epoxid-Gruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden

Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von Mn $\leq$ 2000 g/mol.

Der Anteil an Epoxidharz beträgt >0 bis 100 Gew.-%, bevorzugt 10 bis 70 Gew.-% und besonders bevorzugt 30 bis 60 Gew.-%, bezogen auf das Gesamtgewicht der Harzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether oder Trimethylolpropan-triglycidylether (TMPTGE). Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE).

Die Reaktivverdünner liegen bevorzugt in einer Menge von 0 bis 60 Gew.-% vor, insbesondere von 1 bis 20 Gew.-%, bezogen auf das Gesamtgewicht der Harzkomponente (A).

Der Anteil der Epoxidkomponente (A) an der Gesamtmasse der Mehrkomponenten-Mörtelmasse beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterzusammensetzung beschrieben.

Der Haftvermittler kann in einer Menge bis zu 10 Gew.-%, bevorzugt 0,1 bis 5 Gew.-%, bezogen auf das Gesamtgewicht der Epoxidharzkomponente (A), enthalten sein.

Der Anteil an Füllstoffen beträgt vorzugsweise 0 bis 75Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Mehrkomponenten-Epoxidharzmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Die Mehrkomponenten-Epoxidharzmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Epoxidharzkomponente (A) und die Härterkomponente (B) der Mörtelmasse reaktionsinhibierend voneinander getrennt angeordnet sind.

Zur bestimmungsgemäßen Anwendung werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels

einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxiden der Harzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Komponenten A und B werden bevorzugt in einem Verhältnis gemischt, das entsprechend der EEW- und AHEW-Werte eine ausgeglichene Stöchiometrie ergibt.

Der AHEW-Wert *(amine hydrogen equivalent weight,* H-Äquivalent) gibt die Menge der Härterkomponente an, die 1 mol reaktives H enthält Die Bestimmung des AHEW erfolgt in für den Fachmann bekannter Weise anhand der Formulierung der Reaktionsmischung aus den bekannten H-Äquivalenten der verwendeten Edukte und Rohstoffe, aus denen sie errechnet werden.

Am Beispiel von meta-Xylylendiamin ($M_W$ = 136 g/mol, Funktionalität = 4 eq/mol) ist die Errechnung des AHEW nachfolgend exemplarisch erläutert:

$$\text{Allgemeine Formel: } AHEW = \frac{Mw}{Funktionalität} = \frac{136}{4}\left[\frac{g}{eq}\right] = 34\left[\frac{g}{eq}\right]$$

Die EEW *(epoxide equivalent weight,* Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$T_g2$") besitzt das optimale Verhältnis von Epoxidharz und Amin. Aus dem bekannten EEW und dem optimalen Epoxidharz/Amin-Verhältnis lässt sich der AHEW-Wert berechnen.

Beispiel: EEW = 158 g/mol

Mischung Amin/Epoxidharz mit maximaler $T_g2$: 1 g Amin mit 4,65 g Epoxidharz

$$AHEW = \frac{1}{4{,}65} \cdot 158 = 34\left[\frac{g}{eq}\right]$$

AUSFÜHRLICHE BESCHREIBUNG VON AUSFÜHRUNGSBEISPIELEN

Weitere Vorteile der Erfindung ergeben sich aus der nachfolgenden Beschreibung von bevorzugten Ausführungsbeispielen, die jedoch in keiner Weise als einschränkend zu verstehen sind.

**Herstellung der Mannich-Base**

Allgemeine Herstellungsvorschrift

Die Herstellung der Mannichbasen kann nach an sich bekannten Verfahren erfolgen, wie nachstehend angegeben:
2 mol eines oder mehrerer Amine werden in einem 250 ml-Dreihalskolben vorgelegt, der mit einem Thermometer, einem Tropftrichter und einer Rührvorrichtung versehen ist. Unter Rühren wird das vorgelegte Amin mit etwa 1 mol Phenol oder styrolisiertem Phenol versetzt. Die Mischung wird auf etwa 80°C erwärmt. Sodann werden unter starkem Rühren etwa 0,7 mol Formaldehyd als 37%ige Formaldehydlösung in Wasser über etwa 45 min zugetropft. Nach Ende der Zugabe von Formaldehyd wird die Reaktionsmischung weiter auf etwa 105°C erwärmt, und die Reaktionsmischung wird etwa 120 min auf dieser Temperatur gehalten. Anschließend wird Wasser unter steigendem Vakuum bei geeigneter Temperatur (z.B. etwa. 110°C) abdestilliert. Sobald der Druck stark genug vermindert ist (z.B. auf etwa 50 mbar), kann die Temperatur weiter auf etwa 130°C erhöht und dann für einige Zeit, beispielsweise etwa 60 min lang, auf dieser Temperatur gehalten werden, um das restliche Wasser aus der Reaktionsmischung zu entfernen.

Synthese der Mannichbase MBS2

In einem 1 L Dreihalskolben mit KPG-Rührer und Innenthermometer werden 220 g (0,91 mol) Novares LS 500 (styrolisiertes Phenol von Rütgers Novares GmbH, Deutschland; mittlere Molmasse 243 g/mol) mit 190,4 g (221 ml,

entsprechend 1,64 mol; 1,8 eq) 1,5-Diamino-2-methylpentan versetzt, und das Reaktionsgemisch wird auf 80°C (Innentemperatur) erwärmt. Anschließend werden 115 ml (1,46 mol; 1,6 eq) Formaldehyd (37%ig; 10-15 % MeOH als Stabilisator, d = 1,09 g/cm$^3$) vorsichtig zugetropft. Während der Zugabe von Formaldehyd sollte die Temperatur der Reaktionsmischung 90°C nicht überschreiten (exotherme Reaktion). Nach vollständiger Zugabe der Formaldehydlösung wird das Reaktionsgemisch noch weitere 45 min lang bei 85 bis 90°C gerührt. Anschließend das Gemisch auf 100°C erwärmt und 1 h lang auf dieser Temperatur gehalten. Dann werden bei etwa 140°C das entstandene Wasser sowie überschüssiger Formaldehyd im starken Stickstoffstrom während 3 h abgeblasen. Das Produkt erstarrt beim Abkühlen auf Raumtemperatur.

Die Ausbeute an Mannichbase beträgt 456 g Rohprodukt.

<u>Synthese der Mannichbase MBS1</u>

In einem 2 L-Dreihalskolben mit KPG-Rührer und Innenthermometer werden 504 g (2,07 mol) Novares LS 500 mit 601 ml (4,6 mol; 2,2 eq; d = 1,032 g/cm$^3$) m-Xylylendiamin versetzt, und das Reaktionsgemisch wird auf 80°C (Innentemperatur) erwärmt. Anschließend werden 327 ml (4,15 mol) Formaldehyd (37%ig; 10-15 % MeOH als Stabilisator, d = 1,09 g/cm$^3$) langsam während etwa 1,5 h zugetropft. Während der Zugabe von Formaldehyd sollte die Temperatur der Reaktionsmischung 90°C nicht überschreiten (exotherme Reaktion). Nach vollständiger Zugabe der Formaldehydlösung wird das Reaktionsgemisch noch weitere 2 h lang bei 85 bis 95°C Innentemperatur gerührt. Anschließend wird das Gemisch auf 100°C erwärmt und etwa 1 h lang auf dieser Temperatur gehalten. Danach werden bei etwa 140°C das entstandene Wasser sowie überschüssiger Formaldehyd im starken Stickstoffstrom während etwa 3 h abgeblasen. Das Produkt verfestigt sich beim Abkühlen auf Raumtemperatur.

Die Ausbeute an Mannichbase beträgt 1,13 kg Rohprodukt.

**Beispiele 1 bis 4 sowie Vergleichsbeispiele 1 und 2**

<u>*Bestimmung der Reaktionskinetik durch Temperaturmessung*</u>

Es wurden Härterkomponenten mit unterschiedlichem Anteil von Novolakharz und unterschiedlichen Novolakharzen hergestellt, um die Aushärtung der Mischungen aus Härterkomponente und Epoxidharzkomponente über den Temperaturverlauf der Aushärtereaktion zu verfolgen. Dabei zeigte sich, dass der Temperaturverlauf der Aushärtereaktion durch die Variation des Novolakharzes und dessen Anteil in der Härterkomponente in einem weiten Bereich eingestellt werden kann.

Die Mengenangaben in den nachfolgenden Beispielen beziehen sich auf Gewichtsprozent (Gew.-%).

Zur Herstellung der Epoxidharzkomponente A wurden die in der nachfolgenden Tabelle 1 angegebenen Bestandteile in einem Speedmixer gemischt. Das Epoxidequivalent EEW der Mischung betrug 158 g/EQ.

Ferner wurden verschiedene Härterkomponenten B mit der in der nachfolgenden Tabelle 2 angegebenen Zusammensetzung hergestellt. Als Aminhärter wurden die gemäß der oben beschriebenen Synthesevorschrift erhaltene Mannich-Base MBS2 und m-Xylylendiamin (mXDA; Hersteller: Aldrich, Deutschland) verwendet. Als Beschleuniger wurde das unter dem Handelsnamen Phenolite TD-2093 Y von DIC Europe, Deutschland, erhältliche Phenolnovolakharz eingesetzt.

**Tabelle** 1: Zusammensetzung der Epoxidharzkomponente A

| **Stoff** | **Funktion** | **Gew.-%** | **Handelsname** | **Hersteller** | **Land** |
|---|---|---|---|---|---|
| Bisphenol A-basiertes Epoxidharz | Epoxidharz | 52 | DER 330 | Dow Europe | CH |
| Bisphenol F-basiertes Epoxidharz | Epoxidharz | 28 | DER 354 | Dow Europe | CH |
| 1,4-Butanedioldiglycidyl ether | Reaktivverdünner | 10 | Polypox R3 | Dow Europe | CH |
| Trimethyol-propantriglycidylether | Reaktivverdünner | 10 | Araldite DY-T | Huntsman | BE |

**Tabelle 2:** Zusammensetzung der Härterkomponente B

| | **MBS2** | **mXDA** | **Phenolnovolak** | **AHEW** | **Gewichtsverhältnis Komponente A : B** |
|---|---|---|---|---|---|
| Vergleichsbeispiel 1 | 20 | 80 | **0** | 140,77 | 3,88 |
| Vergleichsbeispiel 2 | 50 | 50 | **0** | 58,12 | 2,72 |
| Beispiel 1 | 50 | 48 | 2 | 60,18 | 2,63 |

(fortgesetzt)

| | MBS2 | mXDA | Phenolnovolak | AHEW | Gewichtsverhältnis Komponente A : B |
|---|---|---|---|---|---|
| Beispiel 2 | 50 | 45 | 5 | 63,55 | 2,49 |
| Beispiel 3 | 20 | 65 | 15 | 49,71 | 3,18 |
| Beispiel 4 | 10 | 68 | 22 | 48,78 | 3,24 |

Die Epoxidkomponente A wurde mit jeweils einer der Härterkomponenten B in dem in Tabelle 2 angegebenen Gewichtsverhältnis im Speedmixer gemischt. Die Mischung wurde in ein 20 ml Rollrandglas gefüllt. Ein Temperaturfühler wurde mittig im Rollrandglas platziert und die Temperaturänderung der Mischung wurde aufgezeichnet (Gerät: Yokogawa, DAQ-Station, Model: DX1006-3-4-2). Die Temperaturänderung über die Zeit dient als Maß für die Aushärtung der Mischung. Findet eine Beschleunigung der Aushärtung statt, ist das Temperaturmaximum zu kürzeren Zeiten hin verschoben. Desweiten tritt in den meisten Fällen auch ein höheres Temperaturmaximum auf. Es werden die Zeit $t_{+10K}$, nach der eine Temperaturerhöhung um 10 K stattgefunden hat, das erreichte Temperaturmaximum $T_{max}$ und die Zeit $t_{Tmax}$, nach der das Temperaturmaximum erreicht wurde, gemessen.

Die Ergebnisse der für die verschiedenen Härterkomponenten B erhaltenen Temperaturänderungen während der Aushärtereaktion sind in der nachfolgenden Tabelle 3 angegeben.

**Tabelle 3:** Temperaturverlauf während der Aushärtung

| | $t_{+10K}$ [h:min:sec] | $T_{max}$ [°C] | $t_{Tmax}$ [h:min:sec] |
|---|---|---|---|
| Vergleichsbeispiel 1 | - | 29,1 | 04:26:57 |
| Vergleichsbeispiel 2 | 1:26:45 | 129,6 | 02:39:55 |
| Beispiel 1 | 1:13:51 | 138,3 | 01:39:28 |
| Beispiel 2 | 00:53:25 | 151,9 | 01:15:01 |
| Beispiel 3 | 00:35:40 | 150,1 | 01:09:33 |
| Beispiel 4 | 00:19:24 | 189,3 | 00:39:27 |

Die für die verschiedenen Härterkomponenten B erhaltenen Ergebnisse des Temperaturverlaufs der Aushärtereaktion zeigen, dass mit der Zusammensetzung von Vergleichsbeispiel 1 keine Temperaturerhöhung um 10 K erreicht wird. Die maximale Temperatur, die nach ca. 4,5 Stunden gemessen wird, beträgt lediglich 29°C. Die Härterkomponente B von Vergleichsbeispiel 2 ergibt nach etwa 1,5 Stunden eine Temperaturerhöhung um 10 K, und das Temperaturmaximum von 130°C wird nach etwa 2,65 Stunden gemessen.

Die Härterkomponenten B gemäß den Beispielen 1 bis 4 erreichen eine Temperaturerhöhung um 10 K nach 19 bis 74 Minuten, und die Temperaturmaxima betragen 138 bis 190°C. Die Temperaturmaxima liegen damit deutlich über denjenigen der Vergleichsbeispiele. Insbesondere werden die Temperaturmaxima bereits nach einer Zeit von zwischen 39 Minuten und 1,65 Stunden erreicht, und damit mindestens eine Stunde früher als im Vergleichsbeispiel 2. Durch die Zugabe des Novolakharzes kommt es demnach zu einer deutlichen Beschleunigung der Reaktion und damit der Aushärtung. Die Beschleunigung ist abhängig von der Konzentration des Phenolnovolaks, wobei mit höheren Konzentrationen eine deutliche Beschleunigung erreicht werden kann, sowie vom Typ des eingesetzten Phenolnovolaks.

**Beispiele 5 und 6 sowie Vergleichsbeispiel 3**

*Bestimmung der Reaktionskinetik durch Temperaturmessung*

Zur Herstellung der Epoxidharzkomponente A wurden die in der obigen Tabelle 1 angegebenen Bestandteile in einem Speedmixer gemischt. Das Epoxidequivalent der Mischung betrug 158 g/EQ.

Ferner wurden verschiedene Härterkomponenten B mit den in der nachfolgenden Tabelle 4 angegebenen Zusammensetzung hergestellt. Als Aminhärter wurden eine unter dem Handelsnamen Epikure 132 von Momentive Specialty Chemicals, Niederlande, erhältliche Mannich-Base auf der Grundlage von Bisphenol A und dem Amin mXDA sowie mXDA (Hersteller: Aldrich, Deutschland) und 1,3-Cyclohexandiemethanamin (1,3-BAC) von Itochu Deutschland verwendet. Als Beschleuniger wurde ein unter dem Handelsnamen Phenolite TD-2131 von DIC Europe, Deutschland, erhältliches Phenolnovolakharz eingesetzt.

**Tabelle 4:** Zusammensetzung der Härterkomponente B

| | **Epikure 132** | **mXDA** | **1,3-BAC** | **Phenolnovolak** | **AHEW** | **Gewichtsverhältnis Komponente A : B** |
|---|---|---|---|---|---|---|
| Beispiel 5 | 50 | 38 | 0 | 12 | 48,50 | 3,26 |
| Beispiel 6 | 50 | 0 | 38 | 12 | 63,55 | 2,49 |
| Vergleichsbeispiel 3 | 100 | 0 | 0 | 0 | 53,0 | 2,98 |

Die Epoxidkomponente A wurde mit jeweils einer der Härterkomponenten B in dem in Tabelle 2 angegebenen Gewichtsverhältnis gemischt. Die Mischung wurde in ein 20 ml Rollrandglas gefüllt. Ein Temperaturfühler wurde mittig im Rollrandglas platziert und die Temperaturänderung der Mischung wurde aufgezeichnet (Gerät: Yokogawa, DAQ-Station, Model: DX1006-3-4-2). Die Temperaturänderung über die Zeit dient als Maß für die Aushärtung der Mischung. Findet eine Beschleunigung der Aushärtung statt, ist das Temperaturmaximum zu kürzeren Zeiten hin verschoben. Desweiten tritt in den meisten Fällen auch ein höheres Temperaturmaximum auf. Es werden die Zeit $t_{+10K}$, nach der eine Temperaturerhöhung um 10 K stattgefunden hat, das erreichte Temperaturmaximum $T_{max}$ und die Zeit $h_{Tmax}$, nach der das Temperaturmaximum erreicht wurde, gemessen.

Die Ergebnisse der für die verschiedenen Härterkomponenten B erhaltenen Temperaturänderungen während der Aushärtereaktion sind in der nachfolgenden Tabelle 5 angegeben.

**Tabelle** 5: Temperaturänderung während der Aushärtung

| | **$t_{+10K}$ [h:min:sec]** | **$T_{max}$ [°C]** | **$t_{Tmax}$ [h:min:sec]** |
|---|---|---|---|
| Beispiel 5 | 00:22:49 | 183,8 | 00:48:03 |
| Beispiel 6 | 00:13:36 | 200,0 | 00:36:18 |
| Vergleichsbeispiel 3 | 00:33:30 | 80,0 | 01:27:06 |

Wieder zeigen die Massen mit den erfindungsgemäßen Härterkomponenten B gemäß den Beispielen 5 und 6 ein schnelleres Aushärteverhalten als das Vergleichsbeispiel 3. Sowohl die Temperaturerhöhung um 10 K als auch die Zeit, nach der das Temperaturmaximum erreicht wird, sind kürzer als im Vergleichsbeispiel. Das für die Härterkomponenten B der Beispiele 5 und 6 erreichte Temperaturmaximum ist mit 184 bzw. 200°C ebenfalls deutlich höher als das für die Härterkomponente von Vergleichsbeispiel 3 erreichte Temperaturmaximum von 80°C.

**Beispiele 7 bis** 10 **und Vergleichsbeispiele 4 bis 7**

*Bestimmung der Versagenslast nach unterschiedlichen Aushärtezeiten*

Zur Herstellung der Epoxidharzkomponente A wurden die in der folgenden Tabelle 6 angegebenen Bestandteile in einem Speedmixer gemischt. Das Epoxidequivalent EEW der Mischung betrug 257 g/EQ.

**Tabelle** 6: Zusammensetzung der Epoxidharzkomponente A

| **Bestandteil** | **Funktion** | **Gew.%** | **Handelsname** | **Hersteller** |
|---|---|---|---|---|
| 3-Glycidyloxy-propyltrimethoxysilan | Haftvermittler | 2,6 | Dynasylan GLYMO | Evonik Industries, DE |
| Bisphenol A-basiertes Epoxidharz | Epoxidharz | 31,1 | DER 330 | Dow Europe, CH |
| Bisphenol F-basiertes Epoxidharz | Epoxidharz | 16,6 | DER 354 | Dow Europe, CH |
| 1,4-Butanedioldiglycidylether | Reaktivverdünner | 6 | Polypox R3 | Dow Europe, CH |
| Trimethyolpropantriglycidylether | Reaktivverdünner | 6 | Araldite DY-T | Huntsman, BE |
| Quarz | Füllstoff | 35 | Millisil W12 | Quarzwerke Frechen, DE |
| Kieselsäure | , Verdicker | 2,7 | Cab-O-Sil TS-720 | Cabot Rheinfelden, DE |

Zur Herstellung der verschiedenen Härterkomponenten B wurden die in der folgenden Tabelle 7 angegebenen Bestandteile verwendet und miteinander in der in der nachfolgenden Tabelle 8 angegebenen Zusammensetzung

gemischt. Die mXDA-Resorcin-basierte Mannich-Base wurde analog der Synthesevorschrift in der EP 0 645 408 synthetisiert. Als Härter wurde die mXDA-Resorcin-basierte Mannich-Base in mXDA gelöst verwendet. Der Gehalt an freiem mXDA betrug 60 %.

**Tabelle** 7: Bestandteile der Härterkomponenten B

| **Bestandteil** | **Funktion** | **Handelsname** | **Hersteller** | **Land** |
|---|---|---|---|---|
| Mannich-Base MBS2 | Härter | | | |
| Mannich-Base MBS1B | Härter | | | |
| mXDA-Bisphenol A-basierte Mannich-Base in mXDA | Härter | Epikure 132 | Momentive Specialty Chemicals | NL |
| mXDA-Resorcin-basierte Mannich-Base, gelöst in mXDA | Härter | | | |
| Novolak | Beschleuniger | Phenolite TD-2131 | DIC Europe | DE |
| 4,4'-Dihydroxydiphenylmethan | Beschleuniger | Bisphenol F | TCI Europe | BE |
| 2,4'-Dihydroxydiphenylmethan | Beschleuniger | 2,4-Bispenol F | TCI Europe | BE |
| 1,3-Cyclohexandimethanamin | Härter | 1,3-BAC | Itochu Deutschland | DE |
| m-Xylylendiamin | Härter | mXDA | Itochu Deutschland | DE |
| 3-Aminopropyl-triethoxysilan | Haftvermittler | Dynasylan AMEO | Evonik Degussa | DE |
| 2,4,6-Tris(dimethyl-aminomethyl)phenol, Bis[(dimethylamino)-methyl]phenol | Beschleuniger | Ancamine K54 | Air Products | NL |
| Quarz | Füllstoff | Millisil W12 | Quarzwerke Frechen | DE |
| Kieselsäure | Verdicker | Cab-O-Sil TS-720 | Cabot Rheinfelden | DE |

**Tabelle 8:** Zusammensetzung der Härterkomponenten B

| **Bestandteil** | **Beispiel 7** | **Vergleichsbeispiel 4** | **Beispiel 8** | **Vergleichsbeispiel 5** |
|---|---|---|---|---|
| MBS2 | 26,3 | 26,3 | | |
| MBS1B (MBS1, 75 % gelöst in mXDA) | | | 35,2 | 35,2 |
| Novolak | 6,3 | | 6,3 | |
| 1,3-BAC | 26,1 | 32,4 | | |
| mXDA | | | 17,1 | 23,4 |
| 3-Aminopropyl-triethoxysilan | 1,9 | 1,9 | 1,9 | 1,9 |
| Ancamine K54 | 1,9 | 1,9 | 1,9 | 1,9 |
| Quarz | 35 | 35 | 35,1 | 35,1 |
| Kieselsäure | 2,5 | 2,5 | 2,5 | 2,5 |
| AHEW | 113 g/EQ | 94 g/EQ | 92 g/EQ | 78 g/EQ |

**Tabelle 8 (Fortsetzung):** Zusammensetzung der Härterkomponente B

| **Stoff** | **Beispiel 9** | **Vergleichs-beispiel 6** | **Beispiel 10** | **Vergleichsbeispiel 7** |
|---|---|---|---|---|
| Epikure 132 | 47,4 | 54 | | |
| mXDA-Resorcin-basierte Mannich-Base in mXDA | | | 49,3 | 49,3 |
| Novolak | 6,4 | | 6,7 | |
| mXDA | 3,9 | 3,4 | | 6,7 |
| 3-Aminopropyl-triethoxysilan | 1,9 | 2 | 2 | 2 |

(fortgesetzt)

| Stoff | Beispiel 9 | Vergleichs-beispiel 6 | Beispiel 10 | Vergleichsbeispiel 7 |
|---|---|---|---|---|
| Ancamine K54 | 1,9 | 2 | 2 | 2 |
| Quarz | 35,9 | 36 | 37,3 | 37,3 |
| Kieselsäure | 2,6 | 2,6 | 2,7 | 2,7 |
| AHEW | 97 g/EQ | 88 g/EQ | 96 g/EQ | 81 g/EQ |

**Tabelle 8 (Fortsetzung):** Zusammensetzung der Härterkomponente B

| Stoff | Beispiel 11 | Beispiel 12 | Beispiel 13 | I Beispiel 14 |
|---|---|---|---|---|
| Epikure 132 | - | 49,0 | 49,0 | 50,8 |
| mXDA-Resorcin-basierte Mannich-Base in mXDA | 49,3 | - | - | - |
| 4,4'-Dihydroxydiphenylmethan | 6,7 | 5,0 | 2,5 | 1,5 I[I] |
| 2,4'-Dihydroxydiphenylmethan | - | - | 2,5 | 1,6 |
| mXDA | - | 3,4 | 3,4 | 3,5 |
| 3-Aminopropyl-triethoxysilan | 2,0 | 2,0 | 2,0 | 2,0 |
| Ancamine K54 | 2,0 | 2,0 | 2,0 | 2,0 |
| Quarz | 37,3 | 36,0 | 36,0 | 36,0 |
| Kieselsäure | 2,7 | 2,6 | 2,6 | 2,6 |
| AHEW | 96 g/EQ | 96 g/EQ | 96 g/EQ | 93 g/EQ |

Beispiele 11-14 sind Vergleichsbeispiele. Zur Herstellung von härtbaren Epoxidharzmassen werden die Komponenten A und B werden im Speedmixer in einem Verhältnis gemischt, das entsprechend der EEW- und AHEW-Werte eine ausgeglichene Stöchiometrie ergibt. Das Gemisch wird möglichst blasenfrei in eine 1K-Kartusche gefüllt und sofort ins Bohrloch eingebracht.

Für Auszugsversuche mit Gewindestangen M12 wird, gemäß ETAG 001 PART 5, wie folgt vorgegangen: Zunächst werden Bohrlöcher (Durchmesser 14 mm; Tiefe 72 mm) in einen horizontal liegenden Betonprüfkörper (Betontyp C20/25) mit einem Hammerbohrer eingebracht. Die Bohrlöcher werden mit Druckluft (2 x 6 bar), einer Drahtbürste (2 x) und anschließend wieder Druckluft (2 x 6 bar) gereinigt. Anschließend werden die Bohrlöcher vom Bohrgrund her mit der jeweils zu prüfenden härtbaren Epoxidharzmasse für Befestigungszwecke zu zwei Dritteln gefüllt. Je Bohrloch wird eine Gewindestange von Hand eingedrückt. Der Mörtelüberschuss wird mit einem Spachtel entfernt. Nach der für den jeweiligen Versuch angegebenen Zeit wird die Gewindestange bis zum Versagen gezogen und die Versagenslast gemessen.

**Tabelle** 9: Versagenslasten in N/mm$^2$ nach vorbestimmter Aushärtezeit:

| | 3 h | 6 h | 24 h | Zusammensetzung des organischen Anteils der Härterkomponente |
|---|---|---|---|---|
| Beispiel 7 | 0,5 | 28,2 | 37,3 | 45% MBS2 + 12% Novolak + 43%1,3-BAC |
| Vergleichsbeispiel 4 | < 0,4 | 2,4 | 37,8 | 45% MBS2 + 55%1,3-BAC |
| Beispiel 8 | 1,2* | 21,3 | 38,2 | 45% MBS1B + 12% Novolak + 43% mXDA |
| Vergleichsbeispiel 5 | < 0,4 | 0,9 | 38,8 | 45% MBS1B + 55% mXDA |
| Beispiel 9 | 4 | 33,8 | 39,1 | 83% Epikure 132 + 12% Novolak + 5% mXDA |
| Vergleichsbeispiel 6 | < 0,4 | 26,1 | 39,0 | 94% Epikure 132 + 6% mXDA |
| Beispiel 10 | 1,8 | 29,2 | 37,1 | 88% mXDA-Resorcin-basierte Mannich-Base in mXDA + 12% Novolak |

(fortgesetzt)

| | 3 h | 6 h | 24 h | Zusammensetzung des organischen Anteils der Härterkomponente |
|---|---|---|---|---|
| Vergleichsbeispiel 7 | < 0,4 | 23,5 | 38,9 | 88% mXDA-Resorcin-basierte Mannich-Base in mXDA + 12% mXDA |
| Beispiel 11 | 4,5 | 34,0 | 35,6 | 88% mXDA-Resorcin-basierte Mannich-Base in mXDA + 12% Bisphenol F |
| Beispiel 12 | 1,5 | 30,9 | 32,6 | 92% Epikure 132 + 8 Bisphenol F |
| Beispiel 13 | 1,2 | 31,4 | 37,8 | 92% Epikure 132 + 8% Bisphenol F-Isomerengemisch |
| Beispiel 14 | <0,4 | 29,8 | 38,3 | 95% Epikure 132 + 5% Bisphenol F-Isomerengemisch |
| *nach 4,5 Std. | | | | |

Die erfindungsgemäßen Epoxidharzmassen mit Härterkomponenten gemäß den

Beispielen 7 bis 10 zeigen eine wesentlich schnellere Aushärtung als die Epoxidharzmassen mit den Härterkomponenten der Vergleichsbeispiele 4 bis 7. Die mit den erfindungsgemäßen Härterkomponenten hergestellten Mörtelmassen für Befestigungszwecke sind bereits nach 6 h belastbar. Damit können die Wartezeiten vor dem nächsten Arbeitsschritt erheblich verkürzt und Folgearbeiten viel früher durchgeführt werden.

## Patentansprüche

1. Härterkomponente zur Beschleunigung der Aushärtereaktion einer Mehrkomponenten-Epoxidharzmasse, die als Härter wenigstens eine Mannich-Base und ein gegenüber Epoxidgruppen reaktives Amin umfasst, sowie wenigstens ein Polyphenol aus der Gruppe der Novolakharze als Beschleuniger,

    wobei die Mannich-Base erhältlich ist durch Umsetzung einer aus der aus Phenol, styrolisiertem Phenol, Brenzkatechin, Resorcin, Hydrochinon, Hydroxyhydrochinon, Phloroglucin, Pyrogallol, o-Kresol, m-Kresol, p-Kresol und Bisphenolen bestehenden Gruppe ausgewählten phenolischen Verbindung, mit einem Aldehyd oder einer Aldehydvorstufe und einem Amin mit wenigstens zwei an ein Stickstoffatom gebundenen aktiven Wasserstoffatomen im Molekül,
    wobei das Novolakharz in einem Anteil von 8 bis 25 Gew.-% in der Härterkomponente enthalten ist, bezogen auf die organischen Anteile der Härterkomponente, und

    wobei das Novolakharz der folgenden Formel entspricht:

    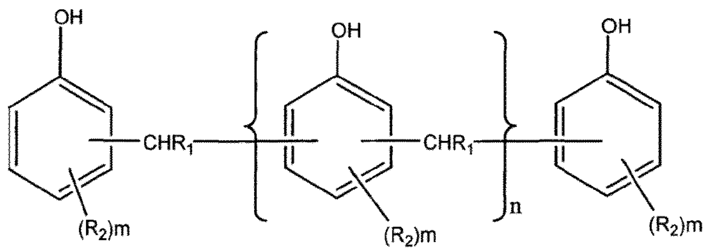

    (V),

    worin

    $R_1$ H bedeutet;
    $R_2$ $C_1$-$C_{15}$ Alkyl bedeutet;
    m 0, 1 oder 2 ist; und
    n 1 bis 15.

2. Härterkomponente nach Anspruch 1, **dadurch gekennzeichnet, dass** das gegenüber Epoxidharzen reaktive Amin aus der aus den aliphatischen, alicyclischen, araliphatischen und aromatischen Aminen bestehenden Gruppe ausgewähltes Amin ist, wobei das Amin im Mittel mindestens zwei an ein Stickstoffatom gebundene reaktive

Wasserstoffatome pro Molekül aufweist, und bevorzugt ein Polyamin mit mindestens zwei Aminogruppen im Molekül ist.

**3.** Härterkomponente nach Anspruch 1 oder 2, **dadurch gekennzeichnet, dass** die phenolische Verbindung aus Phenol und styrolisiertem Phenol sowie deren Mischungen ausgewählt ist.

**4.** Härterkomponente nach einem der vorhergehenden Ansprüche, **dadurch gekennzeichnet, dass** der Aldehyd ein aliphatischer Aldehyd ist, bevorzugt Formaldehyd, und dass die Aldehyd-Vorstufe Trioxan oder Paraformaldehyd umfasst.

**5.** Härterkomponente nach einem der vorhergehenden Ansprüche, **dadurch gekennzeichnet, dass** die Mannich-Base unter Verwendung von mindestens einem der gegenüber Epoxid reaktiven Amine gebildet ist, bevorzugt unter Verwendung eines Polyamins.

**6.** Härterkomponente nach einem der vorhergehenden Ansprüche, **dadurch gekennzeichnet, dass** $R_2$ -$CH_3$ bedeutet und m 1 oder 2 ist, oder $R_2$ tert.-Butyl oder $C_1$-$C_{15}$-Alkyl bedeutet und m 1 ist.

**7.** Härterkomponente nach einem der vorhergehenden Ansprüche, **dadurch gekennzeichnet, dass** die Mannich-Base in einem Anteil von 10 bis 70 Gew.-% in der Härterkomponente enthalten ist, bezogen auf den organischen Anteil der Härterkomponente.

**8.** Härterkomponente nach einem der vorhergehenden Ansprüche, dass das Amin in einem Anteil von 20 bis 80 Gew.-% in der Härterkomponente enthalten ist, bezogen auf den organischen Anteil der Härterkomponente.

**9.** Härterkomponente nach einem der vorhergehenden Ansprüche, **dadurch gekennzeichnet, dass** die Härterkomponente weitere Zusatzstoffe aus der Gruppe der Verdünner, Lösemittel, Beschleuniger, Silane, Verdicker und anorganischen Füllstoffe umfasst.

**10.** Mehrkomponenten-Epoxidharzmasse mit

einer Epoxidharzkomponente (A), die wenigstens ein härtbares Epoxidharz und wahlweise einen Reaktivverdünner enthält,
wenigstens einer Härterkomponente (B) gemäß einem der vorhergehenden Ansprüche,

wobei die Epoxidharzkomponente (A) und die Härterkomponente (B) getrennt voneinander vorliegen.

**11.** Mehrkomponenten-Epoxidharzmasse nach Anspruch 10, wobei die Mehrkomponenten-Epoxidharzmasse weitere Zusätze umfasst, die aus der aus Co-Beschleunigern, Haftvermittlern, Reaktivverdünnern, Verdickern und Füllstoffen bestehenden Gruppe ausgewählt sind.

## Claims

**1.** Hardener component for accelerating the curing reaction of a multicomponent epoxy resin composition, which comprises as the hardener at least one Mannich base and an amine reactive to epoxy groups, and at least one polyphenol from the group of novolak resins as the accelerator,

wherein the Mannich base is obtained by reacting a phenolic compound, selected from the group consisting of phenol, styrenated phenol, pyrocatechol, resorcinol, hydroquinone, hydroxyhydroquinone, phloroglucinol, pyrogallol, o-cresol, m-cresol, p-cresol, and bisphenols, with an aldehyde or an aldehyde precursor and an amine having at least two active hydrogen atoms in the molecule which are bonded to a nitrogen atom,
wherein the novolak resin is contained in the hardener component in a proportion of from 8 to 25 wt.%, based on the organic proportions of the hardener component, and wherein the novolak resin corresponds to the following formula:

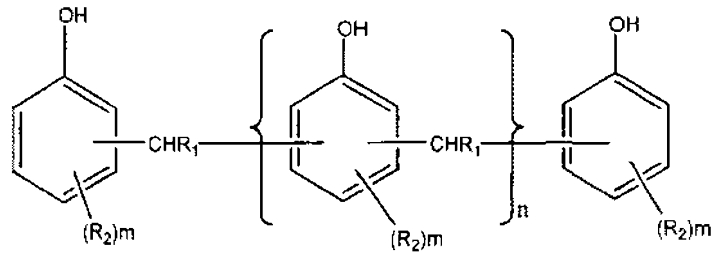

where

$R_1$ represents H;
$R_2$ represents a $C_1$-$C_{15}$ alkyl;
m is 0, 1 or 2; and
n is 1 to 15.

2. Hardener component according to claim 1, **characterized in that** the amine that is reactive to epoxy resins is an amine selected from the group consisting of aliphatic, alicyclic, araliphatic, and aromatic amines, the amine having on average at least two reactive hydrogen atoms per molecule which are bonded to a nitrogen atom, and preferably being a polyamine having at least two amino groups in the molecule.

3. Hardener component according to claim 1 or 2, **characterized in that** the phenolic compound is selected from phenol and styrenated phenol, and mixtures thereof.

4. Hardener component according to any of the preceding claims, **characterized in that** the aldehyde is an aliphatic aldehyde, preferably formaldehyde, **and in that** the aldehyde precursor comprises trioxane or paraformaldehyde.

5. Hardener component according to any of the preceding claims, **characterized in that** the Mannich base is formed using at least one amine that is reactive to epoxide, preferably using a polyamine.

6. Hardener component according to any of the preceding claims, **characterized in that** $R_2$ represents $-CH_3$ and m is 1 or 2, or $R_2$ represents tert-Butyl or a $C_1$-$C_{15}$ alkyl and m is 1.

7. Hardener component according to any of the preceding claims, **characterized in that** the Mannich base is contained in a proportion of from 10 to 70 wt.% in the hardener component, based on the organic proportion of the hardener component.

8. Hardener component according to any of the preceding claims, **characterized in that** the amine is contained in the hardener component in a proportion of from 20 to 80 wt.%, based on the organic proportion of the hardener component.

9. Hardener component according to any of the preceding claims, **characterized in that** the hardener component comprises further additives from the group of diluents, solvents, accelerators, silanes, thickeners, and inorganic fillers.

10. Multicomponent epoxy resin composition comprising

an epoxy resin component (A) containing at least one curable epoxy resin and optionally a reactive diluent,
at least one hardener component (B) according to any of the preceding claims,
wherein the epoxy resin component (A) and the hardener component (B) are separate from one another.

11. Multicomponent epoxy resin composition according to claim 10, wherein the multicomponent epoxy resin composition comprises further additives selected from the group consisting of co-accelerators, adhesion promoters, reactive diluents, thickeners, and fillers.

## Revendications

**1.** Composant durcisseur pour l'accélération de la réaction de durcissement d'une matière en résine époxy à plusieurs composants qui, en tant que durcisseur, comprend au moins une base de Mannich et une amine réactive aux groupes époxy, ainsi qu'au moins un polyphénol du groupe des résines novolaques en tant qu'accélérateur,

dans lequel la base de Mannich peut être obtenue par réaction d'un composé phénolique choisi dans le groupe constitué de phénol, phénol à base de styrène, pyrocatéchine, résorcine, hydroquinone, hydroxyhydroquinone, phloroglucine, pyrogallol, o-crésol, m-crésol, p-crésol et bisphénols, avec un aldéhyde ou un précurseur d'aldéhyde et une amine comportant au moins deux atomes d'hydrogène actifs liés à un atome d'azote dans la molécule,
dans lequel la résine novolaque est contenue dans le composant durcisseur dans une proportion allant de 8 à 25 % en poids par rapport aux proportions organiques du composant durcisseur, et

dans lequel la résine novolaque répond à la formule suivante :

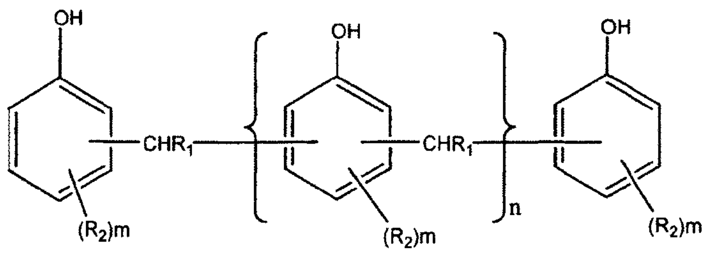

(V),

où

$R_1$ représente H ;
$R_2$ représente un alkyle en $C_1$-$C_{15}$ ;
m représente 0, 1 ou 2 ; et
n représente 1 à 15.

**2.** Composant durcisseur selon la revendication 1, **caractérisé en ce que** l'amine réactive aux résines époxy est choisie dans le groupe constitué d'amines aliphatiques, alicycliques, araliphatiques et aromatiques, dans lequel l'amine présente en moyenne au moins deux atomes d'hydrogène réactifs liés à un atome d'azote par molécule, et est de préférence une polyamine comportant au moins deux groupes amino dans la molécule.

**3.** Composant durcisseur selon la revendication 1 ou 2, **caractérisé en ce que** le composé phénolique est choisi parmi le phénol et le phénol à base de styrène, ainsi que leurs mélanges.

**4.** Composant durcisseur selon l'une des revendications précédentes, **caractérisé en ce que** l'aldéhyde est un aldéhyde aliphatique, de préférence le formaldéhyde, **et en ce que** le précurseur d'aldéhyde comprend du trioxane ou du paraformaldéhyde.

**5.** Composant durcisseur selon l'une des revendications précédentes, **caractérisé en ce que** la base de Mannich est formée à l'aide d'au moins une des amines réactives aux époxydes, de préférence à l'aide d'une polyamine.

**6.** Composant durcisseur selon l'une des revendications précédentes, **caractérisé en ce que** $R_2$ représente $-CH_3$ et m représente 1 ou 2, ou $R_2$ représente le tert-butyle ou un alkyle en $C_1$-$C_{15}$ et m représente 1.

**7.** Composant durcisseur selon l'une des revendications précédentes, **caractérisé en ce que** la base de Mannich est contenue dans le composant durcisseur dans une proportion allant de 10 à 70 % en poids par rapport à la proportion organique du composant durcisseur.

**8.** Composant durcisseur selon l'une des revendications précédentes, **caractérisé en ce que** l'amine est contenue dans le composant durcisseur dans une proportion allant de 20 à 80 % en poids par rapport à la proportion organique du composant durcisseur.

**9.** Composant durcisseur selon l'une des revendications précédentes, **caractérisé en ce que** le composant durcisseur comprend d'autres additifs du groupe des diluants, solvants, accélérateurs, silanes, épaississants et matières de charge inorganiques.

**10.** Matière en résine époxy à plusieurs composants, comportant

un composant de résine époxy (A) contenant au moins une résine époxy durcissable et éventuellement un diluant réactif,
au moins un composant durcisseur (B) selon l'une des revendications précédentes, dans laquelle le composant de résine époxy (A) et le composant durcisseur (B) sont présents de manière à être séparés l'un de l'autre.

**11.** Matière en résine époxy à plusieurs composants selon la revendication 10, dans laquelle la matière en résine époxy à plusieurs composants comprend d'autres additifs choisis dans le groupe constitué de co-accélérateurs, agents adhésifs, diluants réactifs, épaississants et matières de charge.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102013113465 A
- WO 2005090433 A
- WO 2014067095 A
- EP 0351365 A
- EP 1716195 B1
- EP 0645408 A


### In der Beschreibung aufgeführte Nicht-Patentliteratur


- **A. D. MCNAUGHT** ; **A. WILKINSON**. IUPAC Compendium of Chemical Terminology. Blackwell Scientific Publications, 1997